# EUROPEAN PATENT APPLICATION

(11) **EP 2 868 741 A1**
(43) Date of publication of application: **06.05.2015**
(21) Application number: 13808960.2
(22) Date of filing: 28.06.2013
(51) Int. Cl.: C10M 171/00, B24B 27/06, B28D 5/04, B28D 7/02, C10M 107/34, C10M 173/02, H01L 21/304, C10N 20/02, C10N 20/04, C10N 30/00, C10N 40/22

(54) **AQUEOUS PROCESSING LIQUID**

(30) Priority: 29.06.2012 JP 2012147683
(71) Applicant: Idemitsu Kosan Co., Ltd, Tokyo 100-8321 (JP)
(72) Inventor: KITAMURA Tomohiko, Ichihara-shi, Chiba 2990107 (JP)
(74) Representative: Hoffmann Eitle
(86) International application number: PCT/JP2013/067772
(87) International publication number: WO 2014/003157

(57) **Abstract**

An aqueous processing liquid used for cutting a fragile material using a wire saw contains a water-soluble polymer, in which the water-soluble polymer has a mass average molecular weight in a range of 3×10³ to 6×10⁵, and the aqueous processing liquid exhibits a viscosity at 25 degrees C in a range of 1.5 mPa·s to 15 Pa·s.

## Description

### TECHNICAL FIELD

The present invention relates to an aqueous processing liquid, more specifically, an aqueous processing liquid used for cutting a fragile material with a fixed abrasive grain wire saw.

### BACKGROUND ART

In manufacturing semiconductor products, a silicon ingot (that is fragile in nature) needs to be cut. In such a case, a wire saw processing is generally employed in terms of cutting accuracy and productivity. Herein, a cutting method of the silicon ingot includes: a loose abrasive grain method of cutting the silicon ingot with a processing liquid in which grains are dispersed; and a fixed abrasive grain method of cutting the silicon ingot with a wire having grains fixed on its surface in advance.

A processing liquid used for the loose abrasive grain method is exemplified by an aqueous processing liquid containing a friction-coefficient reducer, an anticorrosion adjuvant and the like. An unsaturated fatty acid is used as the friction-coefficient reducer contained in the processing liquid and benzotriazole is used as the anticorrosion adjuvant (see Patent Literature 1). According to the loose abrasive grain method, a large margin is required when a thick wire is used, so that a large amount of cut powder is generated to deteriorate a yield after cutting the ingot. In addition, since the wire becomes worn as being used, there is a limit to reduce a diameter of the wire itself. Accordingly, the loose abrasive grain method is not productive in the manufacturing a silicon wafer for a solar battery and the like, which is expected to be significantly increasingly produced in the future.

On the other hand, a water soluble processing liquid containing glycols has been known as the processing liquid used in the fixed abrasive grain method (see Patent Literatures 2 and 3). In the fixed abrasive grain method, since grains are fixed to the wire in advance, the diameter of the wire is reducible and the cut powder is less producible, thereby resulting in an excellent productivity.

### CITATION LIST

### PATENT LITERATURE(S)

Patent Literature 1: JP-A-8-57848
Patent Literature 2: JP-A-2003-82334
Patent Literature 3: JP-A-2011-21096

### SUMMARY OF THE INVENTION

### PROBLEMS TO BE SOLVED BY THE INVENTION

In the processing of obtaining the wafer by cutting the silicon ingot with the wire saw, a low production cost is severely demanded and the diameter of the wire is desired to be as small as possible in order to increase a yield of the wafer. However, when the diameter of the wire is small, since the ingot needs to be cut by a low tension, the wire may be easily deflected to decrease the cutting accuracy. The above-described problems cannot be fully solved by the fixed abrasive grain method using the water soluble processing liquid as disclosed in Patent Literatures 2 and 3.

An object of the invention is to provide an aqueous processing liquid capable of inhibiting deflection of a small-diameter wire to provide a favorable cutting accuracy, even when a fragile material is cut with the wire.

### MEANS FOR SOLVING THE PROBLEMS

In order to solve the above problems, an aspect of the invention provides the following water soluble processing liquid.
(1) In an aspect of the invention, an aqueous processing liquid used for cutting a fragile material using a wire saw contains a water-soluble polymer, in which the water-soluble polymer has a mass average molecular weight in a range of 3×10³ to 6×10⁵, and the aqueous processing liquid exhibits a viscosity at 25 degrees C in a range of 1.5 mPa·s to 15 Pa·s.
(2) In the aqueous processing liquid in the above aspect of the invention, the wire saw is a fixed abrasive grain wire saw.
(3) In the aqueous processing liquid in the above aspect of the invention, the fixed abrasive grain wire saw has a wire diameter of 0.2 mm or less.
(4) In the aqueous processing liquid in the above aspect of the invention, a content of the water-soluble polymer is in a range of 0.5 mass% to 40 mass% of a total amount of the processing liquid.
(5) The aqueous processing liquid in the above aspect of the invention further contains at least one of a rust inhibitor, friction modifier, antifoaming agent, metal deactivator, bactericide (preservative) and pH adjuster.
(6) In the aqueous processing liquid in the above aspect of the invention, the fragile material is a silicon ingot.

According to the aqueous processing liquid of the invention, even when a fragile material is cut with a small-diameter wire, deflection of the wire can be inhibited to provide a high cutting accuracy. The aqueous processing liquid of the invention is particularly preferably usable for a fixed abrasive grain wire saw.

### DESCRIPTION OF EMBODIMENT(S)

An aqueous processing liquid in an exemplary embodiment (hereinafter, simply referred to as "the present processing liquid") is used in processing a fragile material with a wire saw and contains a predetermined water-soluble polymer.

Accordingly, a main component of the present processing liquid is water. Any water is usable without limitation, but purified water is preferably used and deionized water is particularly preferable. A content of water is preferably in a range of 50 mass% to 99 mass%, more preferably in a range of 60 mass% to 95 mass% of a total amount of the present processing liquid. At the content of 50 mass% or more, since inflammability of the present processing liquid is decreased, safety thereof is increased. Further, the content of 50 mass% or more is favorable in terms of an energy-saving performance and an environmental aspect. The upper limit of water is preferably determined at 99 mass% or less in relation to contents of other components.

Note that the present processing liquid may be prepared by blending the components (e.g., the water-soluble polymer) each by a required concentration at an initial step, or alternatively, a concentrated liquid (stock solution) may be prepared and then diluted in use. The concentrated liquid preferably has a volume magnification of approximately twice to 160 times in terms of handleability.

A viscosity at 25 degrees C of the present processing liquid is in a range of 1.5 mPa·s to 15 Pa·s, preferably in a range of 2 mPa·s to 10 mPa·s, more preferably in a range of 3 mPa·s to 8 mPa·s. At less than 1.5 mPa·s of the viscosity, adhesion to the wire is decreased to cause a poor lubrication, thereby decreasing the cutting accuracy. In contrast, at an excessively high viscosity, since an oil film on a surface of the wire is thickened during the cutting of the wire, bite of grains to a workpiece is deteriorated. Consequently, the wire is heavily deflected to decrease the cutting accuracy.

A mass average molecular weight of the water soluble polymer used in the present processing liquid is preferably in a range of 3×10³ to 6×10⁵, more preferably in a range of 5×10³ to 5×10⁵, further preferably in a range of 7×10³ to 3×10⁵, most preferably in a range of 7×10³ to 1×10⁵.

Since a viscosity-thickening effect is improved at 3×10³ or more of the mass average molecular weight, the present processing liquid easily adheres to the wire to enter an interval between the wire and the material. Accordingly, since peeling of the grains from the wire can be effectively inhibited, the cutting speed can be increased. However, at more than 6×10⁵ of the mass average molecular weight, a molecular chain is likely to be cut by shear, which may cause a large decrease in the viscosity. Accordingly, with respect to the cutting accuracy by the wire, a processing liquid containing a water-soluble polymer having such a high molecular weight becomes inferior to a processing liquid containing a water-soluble polymer having an adequate molecular weight, even if both of the processing liquid has the same viscosity.

The water-soluble polymer preferably has an oxygen-containing group in terms of processability. Examples of the oxygen-containing group are a carboxyl group, hydroxyl group, oxyethylene group, and oxypropylene group. Herein, the carboxyl group and the hydroxyl group include carboxyl group and hydroxyl group in a form of an anion obtained by deprotonation or neutralization.

Examples of the water-soluble polymer are poly(meth)acrylates, metal salts (e.g., Na, K) of poly(meth)acrylates, (meth)acrylate-maleate copolymer or metal salts (e.g., Na, K) thereof, (meth)acrylate-sulfonate copolymer or metal salts (e.g., Na, K) thereof, polyoxyalkylene glycol such as polyoxyethylene glycol and polyoxypropylene glycol, polyvinyl alcohol, a saponification product of an ethylene unsaturated monomer-vinyl acetate copolymer, and modified starch.

A content of the water-soluble polymer is preferably in a range of 0.5 mass% to 40 mass% in the present processing liquid, more preferably in a range of 1 mass% to 20 mass%, further preferably in a range of 2 mass% to 12 mass%. When the content of the water-soluble polymer falls within this range, the viscosity of the present processing liquid is also controllable in a preferable range, so that advantages of the invention is more easily exhibited.

Since the present processing liquid allows the fragile material (e.g., silicon ingot) to be cut at a high speed while the grains are prevented from dropping off, the fragile material can be cut at a high accuracy even using a fixed abrasive grain wire. Accordingly, the present processing liquid is extremely effective in using the fixed abrasive grain wire having a small diameter which requires cutting with a low tension.

A diameter of the fixed abrasive grain wire saw is preferably 0.2 mm or less, more preferably 0.12 mm or less, further preferably 0.1 mm or less, most preferably 0.08 mm or less. At the smaller diameter of the wire saw, a yield at which a product is obtained from the fragile material (workpiece) can be increased. With the use of the present processing liquid, since the bite of the grains to the workpiece is enhanced to increase a cutting efficiency, deflection of the wire saw even having a small diameter can be inhibited. However, the diameter of the wire saw is preferably 0.06 mm or more in terms of strength.

The present processing liquid may contain known additives such as a rust inhibitor, friction modifier, antifoaming agent, metal deactivator, bactericide (preservative) and pH adjuster as long as the effects of the invention is not impaired.

Examples of the rust inhibitor are alkylbenzenesulfonate, dinonylnaphthalenesulfonate, alkenyl succinate and polyhydric alcohol ester. A content of the rust inhibitor is preferably in a range of approximately 0.01 mass% to 5 mass% of a total amount of the processing liquid.

The friction modifier is used for inhibiting abrasion of the grains. Various surfactants are usable as the friction modifier. A non-ionic surfactant (e.g., glycols) is a preferable example of the surfactants. A content of the surfactant is preferably in a range of approximately 0.01 mass% to 5 mass% of the total amount of the processing liquid.

The antifoaming agent is used for preventing the processing liquid from overflowing from a processing liquid tank provided in a processing room. Examples of the antifoaming agent are silicone oil, fluorosilicone oil, and fluoroalkylether. A content of the antifoaming agent is preferably in a range of approximately 0.001 mass% to 1 mass% of the total amount of the processing liquid.

Examples of the metal deactivator are imidazoline, pyrimidine derivative, thiadiazole, and benzotriazole. A content of the metal deactivator is preferably in a range of approximately 0.01 mass% to 5 mass% of the total amount of the processing liquid.

The bactericide (preservative) is used for preventing decomposition of the processing liquid. Examples of the bactericide (preservative) are paraoxy benzoic acid esters (parabens), benzoic acid, salicylic acid, sorbic acid, dehidroacetic acid, p-toluenesulfonic acids and salts thereof, and phenoxyethanol. A content of the bactericide (preservative) is preferably in a range of approximately 0.01 mass% to 1 mass% of the total amount of the processing liquid.

The pH adjuster is used for adjusting pH of the processing liquid to fall within a range of 3 to 9. At the pH of less than 3, anticorrosiveness may be deteriorated. At the pH of more than 9, silicon may be corroded. Examples of the pH adjuster are an organic acid such as acetic acid, malic acid and citric acid, a salt of the organic acid, phosphoric acid and a salt thereof.

### EXAMPLES

Next, the invention will be described in detail with reference to Examples and Comparatives, but the scope of the invention is by no means limited by the Examples and Comparatives.

### Examples 1 to 6, Comparatives 1 to 3

Aqueous processing liquids (sample liquids) of compositions shown in Table 1 were prepared and subjected to the following cut processing for evaluation. Evaluation results are also shown in Table 1.

**Table 1**

| | | Example 1 | Example 2 | Example 3 | Example 4 | Example 5 | Example 6 | Comparative 1 | Comparative 2 | Comparative 3 |
|---|---|---|---|---|---|---|---|---|---|---|
| Composition of Sample Liquids (mass%) | Ethyleneoxide-propyleneoxide block copolymer (Mw13,000) 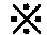 1 | 1.0 | 3.0 | 6.3 | 8.3 | - | 10.5 | - | 12.5 | - |
| | Polyethylene Glycol (Mw20,000) 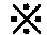 2 | - | - | - | - | 6.0 | - | - | - | - |
| | Polyacrylic Acid (Mw798,000) 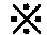 3 | - | - | - | - | - | - | - | - | 1.5 |
| | Ion-Exchange Water | 99.0 | 97.0 | 93.7 | 91.7 | 94.0 | 89.5 | 100.0 | 87.5 | 98.5 |
| | Total | 100.0 | 100.0 | 100.0 | 100.0 | 100.0 | 100.0 | 100.0 | 100.0 | 100.0 |
| Viscosity of Sample Liquids | (25°C mPa·s) | 1.5 | 2.9 | 5.1 | 8.1 | 8.2 | 12.0 | 1.0 | 20.5 | 5.1 |
| Evaluation Results | Accuracy of Silicon Wafer (TTV) (µm) | 43 | 19 | 29 | 33 | 32 | 40 | broken | 62 | 48 |
| | Accuracy of Silicon Wafer (SORI) (µm) | 42 | 36 | 38 | 48 | 47 | 50 | broken | 60 | 55 |

| | | | | | | | | | | |
|---|---|---|---|---|---|---|---|---|---|---|
| *1 ethyleneoxide-propyleneoxide block copolymer having a mass average molecular weight of 13,000 *2 polyethylene glycol having a mass average molecular weight of 20,000 *3 polyacrylic acid having a mass average molecular weight of 798,000 | | | | | | | | | | |

### Processing Method

A silicon ingot was cut by a fixed abrasive grain wire saw to obtain a silicon wafer while pouring the sample liquid over the wire saw, so that a silicon wafer was obtained. Specific conditions were as follows.
Cutter: WSD-K2 (manufactured by Takatori Corporation)
Wire: electrodeposited diamond wire (diameter: 0.08 mm, grain size: 8-16 µm)
Workpiece (ingot): polycrystal silicon (125 mm square)
Tension: 10 N
Wire Running Speed: 700 m/min
Supply of New Wire: 0.2 m/min
Duration of Time at Constant Speed of Wire: 10 s
Duration of Time at Acceleration and Deceleration of Wire: 3 s
Cutting distance: 133 mm

### Evaluation Method

A flatness (total thickness variation (TTV)) and a warpage (SORI) of the wafer obtained by the above-described cut processing were measured.

The flatness (TTV) was obtained by measuring a thickness of the wafer using a dial gauge and was represented by a difference between a maximum thickness and a minimum thickness. In Examples, DIGIMATIC INDICATOR ID-C112CX manufactured by Mitutoyo Corporation was used as the dial gauge.

The warpage (SORI) is a parameter measured by a method defined by the technical standard QIAJ-B-007 established in February 10, 2000 by Quartz Crystal Industry Association of Japan and represents undulation of the wafer in an unclamped condition by a maximum value of deviation from a flat surface (reference flat surface) in contact with a rear surface of the wafer. In Examples, the warpage (SORI) was measured using Nanometro 44F manufactured by KURODA Precision Industries Ltd.

A viscosity of the processing liquid was measured using B-type rotary viscometer TVB-10 (manufactured by TOKI SANGYO CO., LTD).

### Evaluation Results

Since the sample liquids of Examples 1 to 6 contained a predetermined water-soluble polymer of the invention and the viscosity of each of the sample liquids was within a predetermined range, accuracy (TTV and SORI) of the cut silicon wafers was excellent. Moreover, the deflection of the wire during the cut processing was significantly decreased although the diameter of the wire was extremely small as much as 0.08 mm.

In contrast, in Comparative 1 in which the sample liquid was 100 mass% of ionexchange water containing no water-soluble polymer, the wire was broken during the cut processing. In Comparative 2, since the viscosity of the sample liquid was excessively high, the accuracy (TTV and SORI) of the silicon wafer was extremely poor. In Comparative 3, since the mass average molecular weight of the contained water-soluble polymer was excessively high although the viscosity of the sample liquid was within a predetermined range, accuracy (TTV and SORI) of the silicon wafer was also poor.

### INDUSTRIAL APPLICABILITY

An aqueous processing liquid of the invention is suitable for cutting a fragile material such as a silicon ingot using a fixed abrasive grain multi-wire saw.

## Claims

1. An aqueous processing liquid used for cutting a fragile material using a wire saw, comprising:
a water-soluble polymer, wherein
the water-soluble polymer has a mass average molecular weight in a range of 3×10³ to 6×10⁵, and
the aqueous processing liquid exhibits a viscosity at 25 degrees C in a range of 1.5 mPa·s to 15 Pa·s.

2. The aqueous processing liquid according to claim 1, wherein
the wire saw is a fixed abrasive grain wire saw.

3. The aqueous processing liquid according to claim 2, wherein
the fixed abrasive grain wire saw has a wire diameter of 0.2 mm or less.

4. The aqueous processing liquid according to any one of claims 1 to 3, wherein
a content of the water-soluble polymer is in a range of 0.5 mass% to 40 mass% of a total amount of the processing liquid.

5. The aqueous processing liquid according to any one of claims 1 to 4, further comprising:
at least one of a rust inhibitor, friction modifier, antifoaming agent, metal deactivator, bactericide (preservative) and pH adjuster.

6. The aqueous processing liquid according to any one of claims 1 to 5, wherein
the fragile material is a silicon ingot.
